(19) Europäisches Patentamt / European Patent Office / Office européen des brevets

(11) **EP 4 202 784 A1**

(12) **DEMANDE DE BREVET EUROPEEN**

(43) Date de publication:
**28.06.2023 Bulletin 2023/26**

(21) Numéro de dépôt: **22215076.5**

(22) Date de dépôt: **20.12.2022**

(51) Classification Internationale des Brevets (IPC):
**G06N 3/084** (2023.01)  **G06N 3/044** (2023.01)
**G06N 3/0495** (2023.01)  **G06N 3/0442** (2023.01)

(52) Classification Coopérative des Brevets (CPC):
**G06N 3/084; G06N 3/0442; G06N 3/0495**

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**KH MA MD TN**

(30) Priorité: **21.12.2021 FR 2114118**

(71) Demandeur: **THALES**
**92400 Courbevoie (FR)**

(72) Inventeurs:
• **MAISON, Lucas, Sébastien, Nicolas**
**38460 Chozeau (FR)**
• **COURTAT, Thomas, Jean, Florent**
**91767 Palaiseau Cedex (FR)**
• **du MAS des BOURBOUX, Hélion, Marie**
**91767 Palaiseau Cedex (FR)**

(74) Mandataire: **Lavoix**
**2, place d'Estienne d'Orves**
**75441 Paris Cedex 09 (FR)**

(54) **PROCÉDÉ DE MISE AU POINT D'UN DISPOSITIF DE PRÉDICTION, PROCÉDÉ ET SYSTÈME ASSOCIÉS**

(57) La présente invention concerne un procédé de mise au point d'un dispositif de prédiction d'une grandeur physique, le procédé comprenant les étapes de :
- choix d'une structure pour le dispositif de prédiction, la structure étant un ensemble de matrices formant un réseau de neurones présentant des couches récurrentes, chaque matrice de l'ensemble de matrices présentant un ensemble de paramètres à apprendre,
- choix d'un rang en fonction des dimensions des différentes matrices,
- réception d'une base de données,
- entraînement du dispositif de prédiction, l'entraînement comprenant, pour plusieurs itérations, le remplacement des différentes matrices par leur approximation au rang choisi,
- détermination du rang optimal de chaque matrice, et
- obtention d'un dispositif de prédiction mis au point en éliminant les valeurs singulières de chaque matrice présentant un rang supérieur au rang optimal déterminé.

FIG.2

EP 4 202 784 A1

**Description**

La présente invention concerne un procédé de mise au point d'un dispositif de prédiction. Elle concerne aussi un procédé d'observation, un dispositif de prédiction et un système d'observation.

La présente invention se situe dans le domaine de la mise au point de dispositifs de prédiction utilisant des réseaux de neurones. Une telle mise au point utilise une technique d'apprentissage machine. L'apprentissage machine est désigné par de nombreux termes différents comme le terme anglais de « machine learning », le terme « apprentissage automatique », le terme « apprentissage artificiel » ou encore le terme « apprentissage statistique ». L'apprentissage machine consiste à utiliser des données pour mettre au point un dispositif de prédiction.

En particulier, il est souvent utilisé un réseau de neurones artificiels présentant différentes couches de réseaux de neurones récurrentes.

Un réseau de neurones récurrent est un graphe de calcul mettant en jeu au moins une opération récurrente. Une opération récurrente s'applique successivement aux éléments d'une suite ordonnée de données et le résultat pour un élément donné dépendant de l'ensemble des données l'ayant précédé via au moins un état interne à l'opération.

Il existe plusieurs types de réseaux récurrents, notamment mais non exclusivement, les réseaux récurrents standards ou « vanilla » (souvent désigné par le sigle RNN renvoyant à la terminologie Réseau de Neurones Récurrents), les réseaux de neurones récurrents à mémoire court et long terme (aussi désigné par l'abréviation LSTM qui renvoie à la dénomination anglaise correspondante de « Long Short-Term Memory ») ou encore les réseaux récurrents à portes (aussi désigné par l'abréviation GRU qui renvoie à la dénomination anglaise correspondante de « Gated Récurrent Unit »).

Les réseaux de neurones récurrents sont notamment adaptés pour des données d'entrée de type série temporelle.

Toutefois, en pratique, la mise au point de dispositifs d'implémentation de ces réseaux de neurones récurrents est complexe notamment du fait que de tels types de réseaux de neurones impliquent un grand nombre de paramètres et de calculs.

Il existe donc un besoin pour un procédé de mise au point d'un dispositif de prédiction qui soit de mise en oeuvre plus simple, notamment, mais non exclusivement, dans le contexte d'un portage sur cible matériel.

A cet effet, la description décrit un procédé de mise au point d'un dispositif de prédiction, le dispositif de prédiction prenant en entrée un signal d'entrée issu d'au moins un capteur et prédisant en sortie une grandeur physique, le procédé étant mis en oeuvre par ordinateur et comprenant un étape choix d'une structure pour le dispositif de prédiction, la structure étant un ensemble de matrices formant un réseau de neurones présentant des couches récurrentes, chaque matrice de l'ensemble de matrices présentant un ensemble de paramètres à apprendre. Le procédé de mise au point comporte également une étape de choix d'un rang en fonction des dimensions des différentes matrices, une étape de réception d'une base de données et une étape d'entraînement du dispositif de prédiction, pour obtenir un dispositif de prédiction intermédiaire, l'entraînement étant mis en oeuvre avec la base de données reçue, une fonction de coût étant utilisée, l'étape d'entraînement étant itérée jusqu'à ce qu'un premier critère de performance du dispositif de prédiction soit rempli, l'étape d'entraînement comprenant, pour plusieurs itérations, une opération de remplacement du dispositif de prédiction obtenu à l'itération précédente par un dispositif de prédiction dans lequel les différentes matrices sont remplacées par leur approximation au rang choisi à l'étape de choix. Le procédé de mise au point comprend aussi une étape de détermination du rang optimal de chaque matrice pour qu'un deuxième critère de performance de prédiction par le dispositif de prédiction intermédiaire appliqué à la base de données soit rempli, et une étape d'obtention d'un dispositif de prédiction mis au point en remplaçant chaque matrice par les trois matrices de la décomposition en valeurs singulières de ladite matrice et en éliminant les valeurs singulières de chaque matrice présentant un rang supérieur au rang optimal déterminé.

Selon des modes de réalisation particuliers, le procédé de mise au point présente une ou plusieurs des caractéristiques suivantes, prise(s) isolément ou selon toutes les combinaisons techniquement possibles :

- les itérations durant lesquelles une opération de remplacement est mise en oeuvre sont périodiques.
- la fonction de coût est la somme d'une première sous-fonction de coût caractérisant l'erreur de prédiction du dispositif de prédiction et du produit d'une deuxième sous-fonction de coût caractérisant le poids des valeurs singulières des matrices avec un paramètre dont la valeur est fonction de l'itération en cours.
- la deuxième sous-fonction de coût est une norme de Schatten d'ordre p, p étant un nombre entier non nul de préférence égal à 1.
- le paramètre dépendant de l'itération en cours est une fonction affine croissante de l'itération.
- la fonction affine est une fonction affine par morceaux, le paramètre valant 0 sur un morceau et le paramètre valant 1 sur un autre morceau.
- l'étape de détermination du rang d'une matrice est réalisée en itérant sur le rang une opération de calcul de la matrice obtenu en éliminant les valeurs singulières de la matrice présentant un rang supérieur au rang considéré et une opération de calcul de la valeur du deuxième critère de performance de prédiction par le dispositif de prédiction intermédiaire sur le jeu de validations, le rang déterminé étant le premier rang pour lequel le deuxième critère de performance de prédiction par le dispositif de prédiction intermédiaire sur le jeu de validations est rempli.

La description décrit également un procédé d'observation d'un environnement par un système d'observation, le système d'observation comprenant un dispositif de prédiction, le dispositif de prédiction prenant en entrée un signal d'entrée issu d'au moins un capteur et prédisant en sortie une grandeur physique, le dispositif de prédiction ayant été mis au point par le procédé de mise au point tel que précédemment décrit, le procédé comprenant les étapes d'acquisition d'un signal d'entrée par l'au moins un capteur, et de prédiction d'une valeur pour la grandeur physique en utilisant le dispositif de prédiction.

La description porte aussi sur un dispositif de prédiction prenant en entrée un signal d'entrée issu d'au moins un capteur et prédisant en sortie une grandeur physique, le dispositif de prédiction ayant été mis au point par le procédé de mise au point tel que précédemment décrit.

La description décrit également un système d'observation comprenant un dispositif de prédiction tel que précédemment décrit.

Des caractéristiques et avantages de l'invention apparaîtront à la lecture de la description qui va suivre, donnée uniquement à titre d'exemple non limitatif, et faite en référence aux dessins annexés, sur lesquels :

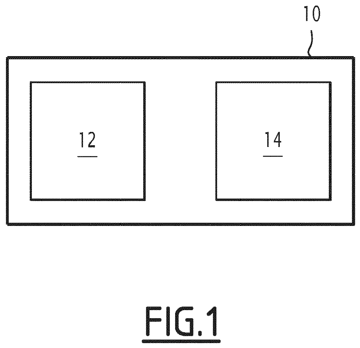

- la figure 1 est une représentation schématique d'un système d'observation, et
- la figure 2 est une représentation schématique d'un ordinogramme d'un exemple de mise en oeuvre d'un procédé de mise au point d'un dispositif de prédiction faisant partie du système d'observation de la figure 1.

Le système d'observation 10 est un système propre à observer l'environnement.

Le système d'observation 10 comporte un capteur 12 et un dispositif de prédiction 14.

Le capteur 12 est propre à acquérir un signal de l'environnement.

Tout type de signal peut ici être envisagé, un signal audio, un signal radio, un signal radar ou un signal visuel notamment.

En outre, le signal peut provenir de plusieurs capteurs si besoin.

Pour la suite, il est supposé que le capteur 12 est un microphone à titre illustratif.

Le dispositif de prédiction 14 prend en entrée un signal d'entrée issu du capteur et prédit en sortie une grandeur physique.

Une grandeur physique est ici à interpréter au sens large comme étant la valeur de l'amplitude et/ou de la phase d'une grandeur mais aussi comme une valeur binaire, par exemple présence ou non d'une voix humaine dans le signal capté par le microphone, ou bien un signal de voix sans bruit.

Le dispositif de prédiction 14 est, en l'occurrence, un dispositif physique implémentant un réseau de neurones.

Le dispositif physique est, de préférence, un dispositif embarqué comme un circuit logique programmable, tel un FPGA (abréviation du terme anglais correspondant de « Field-Programmable Gate Array ») ou bien un CPU (abréviation du terme anglais correspondant de « Central Processing Unit » signifiant littéralement unité centrale de traitement) ou un GPU (abréviation du terme anglais correspondant de « Graphical Processing Unit » signifiant littéralement unité graphique de traitement) ou encore un SoC (acronyme du terme anglais correspondant de « System on Chip » signifiant littéralement système sur puce) intégrant par exemple des DSP (abréviation du terme anglais correspondant de « Digital Signal Processor » signifiant littéralement processeur de signal numérique). Le dispositif physique peut également être une combinaison des composants cités.

Un réseau de neurones est notamment défini dans l'ouvrage « *Deep Learning* », Ian Goodfellox, Yoshua Bengio, Aaron Courville, The MIT Press, 18 novembre 2016, chapitre 6.

Plus spécifiquement, le réseau de neurones est un réseau de neurones récurrent, c'est-à-dire un réseau mettant en oeuvre des couches récurrentes.

Les notions de réseau de neurones récurrent et de couches récurrentes sont, par exemple, décrites dans l'ouvrage précité, au chapitre 10.

De tels réseaux sont particulièrement adaptés pour les séries temporelles, ce qui est le cas ici du fait des données à traiter qui sont des signaux issus de capteur.

En fonctionnement, le système d'observation 10 met en oeuvre un procédé d'observation comportant deux étapes.

Lors de la première étape, le capteur 12 acquiert un signal d'entrée, ici une image de l'environnement.

Puis, lors de la deuxième étape, le dispositif de prédiction 14 prédit une grandeur physique.

Ici, dans l'exemple précité, le dispositif de prédiction 14 donne en sortie la probabilité qu'une voix humaine soit présente dans le signal sonore acquis par le capteur 12.

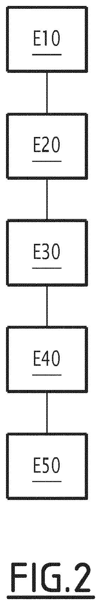

Dans l'exemple proposé, le dispositif de prédiction 14 est de mise en oeuvre plus aisé avec de bonnes performances de prédiction car le dispositif de prédiction 14 a été mis au point par un procédé de mise au point spécifique qui va maintenant être décrit en référence à la figure 2.

Un tel procédé de mise au point est mis en oeuvre par ordinateur, et de préférence par un calculateur, par exemple un CPU ou un GPU.

Le procédé de mise au point cherche à optimiser les paramètres libres du réseau de neurones du dispositif de prédiction 14.

Le procédé de mise au point comporte une étape de choix E10, une étape de réception E20, une étape d'entraînement E30, une étape de détermination E40 et une étape d'obtention E50.

Lors de l'étape de choix E10, il est choisi une structure pour le dispositif de prédiction 14.

La structure du réseau de neurones récurrent est formée de différentes couches récurrentes avec différents liens entre ces couches.

La structure est constituée d'un ensemble de matrices $W_k$, chaque matrice $W_k$ présentant un ensemble de paramètres dits libres ou à apprendre, k étant un nombre entier.

De fait, un réseau de neurones est un ensemble de paramètres $W_k$ et des opérations logiques qui les utilisent, par exemple l'addition, la soustraction, la multiplication ou la division.

Chaque matrice $W_k$ présente un nombre de lignes $H_k$ et un nombre de colonnes $L_k$. Ces deux paramètres sont choisis à l'étape de choix E10.

Le but de la mise au point est de déterminer l'ensemble des coefficients de chacune des matrices. Il y en a un total de $H_k \times L_k$ dans la matrice $W_k$. D'autres paramètres libres peuvent aussi intervenir, on les note $V$.

La réunion des ensembles $W_k$ et de V forme l'ensemble des paramètres θ qui correspondent aux paramètres du réseau de neurones. Celui-ci peut ainsi s'interpréter comme une fonction paramétrée par θ qui a une entrée X associe une prédiction $\hat{y}(X)$.

Dans la suite, $W_k$ fait référence seulement au sous-ensemble des matrices des différentes couches récurrentes du réseau de neurones.

Lors de l'étape de choix E10, un rang de référence $r_r$, utilisé dans la suite pour l'apprentissage, est choisi en fonction des dimensions des différentes matrices $W_k$.

$$r_r = floor\left(\frac{1}{3}\max(\max(H_k, \ L_k))_k\right)$$

Par exemple, . Dans cette équation la fonction *floor(x)* donne le plus petit nombre entier supérieur au nombre *x.*

Lors de l'étape de réception E20, le calculateur reçoit une base de données pour laquelle la valeur à prédire de la grandeur physique est connue a priori pour chaque donnée du signal d'entrée.

La base de données est ainsi un jeu de donnée d'apprentissage pour la tâche de prédiction.

Ce jeu de donnée correspond à des paires $(X,y)_i$ où $X_i$ est une donnée issue d'un signal de capteur et $y_i$ est la valeur qui doit être prédite à partir de la donnée $X_i$.

Au préalable, cette base de données est séparée en trois bases distinctes : base d'entraînement, base de validation et base de test. La proportion du nombre d'éléments de chacune des bases précédentes par rapport au nombre total d'éléments de la base de données reçue est, par exemple, 70%, 15% et 15%.

Lors de l'étape d'entraînement E30, le réseau de neurones possédant des couches récurrentes du dispositif de prédiction 14 est appris.

Lors d'un apprentissage (ou entraînement) d'un réseau de neurones, le réseau de neurones est appris à partir de la base d'entraînement et de la base de validation. De manière connue, un réseau de neurones est dit appris quand l'ensemble de ses paramètres libres est ajusté dans une procédure dite d'apprentissage pour résoudre au mieux le problème posé, selon un critère défini, sur un ensemble de données dites d'entraînement pour lesquels le résultat désiré en sortie du réseau de neurones peut être connu (dans le cas d'un apprentissage supervisé).

Lors de cet apprentissage, les différents paramètres libres du réseau sont ainsi déterminés.

L'entraînement est mené itérativement, chaque itération étant ici appelée « époque ».

Dans l'exemple décrit, il est communément, mais non obligatoirement, décidé au préalable d'un nombre maximum d'époques, en fonction d'un budget en temps. Une époque est définie par l'utilisation de toutes les données différentes de l'ensemble de la base d'entraînement. On note $N_e$ le nombre d'époques, qui est un nombre grand, par exemple $N_e$ = 10 000.

Ici, l'entraînement est mis en oeuvre avec la base d'entrainement de la base de données reçue.

Pour chaque époque, les données d'entrainement sont regroupées en différents ensembles de manière aléatoire pour former ce qui est appelé des lots de données ou plus communément des « batchs » de données selon la dénomination anglaise correspondante. Chaque époque inclut ainsi des sous-itérations sur des sous-ensembles de données regroupées en lots.

Le nombre de couples dans un lot est noté N dans la suite.

Pour l'ensemble des données X du lot, il est calculé la prédiction obtenue par le réseau de neurones. Cette

prédiction est notée $\hat{y}$.

Lors de cet entraînement, il est utilisé un critère d'apprentissage.

Le critère d'apprentissage correspond à une évaluation de l'erreur de détermination de la fonction de détermination.

Le critère d'apprentissage est souvent dénommé « fonction de perte ».

Dans l'exemple décrit, la fonction de perte est spécifique et est notée fonction de coût C.

La première fonction de coût C est la somme d'une première sous-fonction de coût $SC_1$ caractérisant l'erreur de prédiction du dispositif de prédiction et du produit d'une deuxième sous-fonction de coût $SC_2$ caractérisant le poids des valeurs singulières des matrices avec un paramètre λ dont la valeur est fonction de l'itération, ou époque, en cours.

Pour la suite, la première sous-fonction de coût $SC_1$ est notée L(y,y).

Par exemple, la première sous-fonction de coût $SC_1$ est la fonction d'entropie croisée pour une tâche de classification ou bien la norme $L_2$ pour une tâche de suppression de bruit.

La deuxième sous-fonction de coût $SC_2$ est une régularisation sur l'amplitude des valeurs singulières des différentes matrices $W_k$.

Par exemple, la deuxième sous-fonction de coût $SC_2$ est la norme de Schatten d'ordre 1 mais d'autres ordres seraient possibles.

Ainsi, ici, la deuxième sous-fonction de coût $SC_2$ s'écrit mathématiquement comme :

$$SC_2 = \sum_k \|W_k\|_p = \sum_k \left( Tr \left( (W_k \times W_k^T)^{\frac{p}{2}} \right) \right)^{\frac{1}{p}}$$

où :

- $\|.\|_p$ désigne la norme de Schatten d'ordre $p$, p étant un nombre entier non nul, par exemple $p = 1$ ou $p = 2$,
- Tr désigne l'opérateur trace, et
- $W_k^T$ désigne la transposée de la matrice $W_k$.

Le paramètre λ dépend de l'itération, ou époque, en cours, c'est par exemple une constante ou dans un mode de réalisation une fonction affine par morceau et croissante de l'itération (noté e dans la suite).

Plus précisément, la fonction affine est une fonction affine par morceaux, le paramètre valant 0 sur un morceau et le paramètre valant 1 sur un autre morceau.

Ainsi, pour une itération inférieure à un premier seuil $E_1$, la fonction affine est nulle et pour une itération supérieure à un deuxième seuil $E_2$, la fonction affine vaut 1. Entre les deux seuils $E_1$ et $E_2$, la fonction affine est une fonction linéaire reliant les deux morceaux.

De ce fait, dans l'exemple décrit, la fonction de coût C s'écrit mathématiquement comme :

$$C(\hat{y}, y, e, W) = SC_1(\hat{y}, y) + \lambda(e) \times SC_2(W)$$

où :

$$\lambda(e) = \lambda_0 \times \begin{cases} 0, & si\ e < E_1 \\ \dfrac{e - E_1}{E_2 - E_1}, & si\ e < E_2 \\ 1, & si\ e \geq E_2 \end{cases}$$

Dans l'expression précédente, $\lambda_0$ est une constante.

Les deux seuils $E_1$, $E_2$ et la constante $\lambda_0$ sont choisis pour que $E_2 > E_1 > 0$ et $\lambda_0 > 0$.

Par exemple, les deux seuils $E_1$ et $E_2$ sont liés au nombre total d'époque $N_e$ par $E_1 = floor(\frac{N_e}{10})$ et $E_2 = floor(\frac{6\,N_e}{10})$.

La valeur de la constante $\lambda_0$ est choisie de manière à ce que les ordres de grandeurs de $SC_1$ et $\lambda \times SC_2$ soient

similaires.

A titre d'exemple particulier, $E_1$ = 100, $E_2$ = 600 et $\lambda_0$ = 10$^{-4}$.

Une telle première fonction de coût permet une première optimisation sans régularisation, et un ajout graduel de la régularisation sur les valeurs singulières.

Les paramètres libres du réseau de neurones sont alors mis à jour par exploitation de la valeur de la fonction de coût C dans une technique de rétro-propagation du gradient.

De manière sporadique, par exemple régulière toutes les $N_m$ = 50 itérations, ou époques, les différentes matrices $W_k$ sont remplacées par leur approximation au rang de référence $r_r$ précédemment défini, par décomposition en valeurs singulières.

La décomposition en valeurs singulières (aussi désignée par l'abréviation SVD renvoyant à la dénomination anglaise correspondante de « Singular Value Décomposition ») d'une matrice à décomposer permet d'écrire celle-ci comme un produit de trois matrices, la première matrice étant un ensemble de vecteurs de base orthonormés, la deuxième matrice une matrice ayant pour coefficients diagonaux les valeurs singulières de la matrice à décomposer et une troisième matrice étant un ensemble de vecteurs de base orthonormés.

L'enchaînement de phases d'entrainement et de remplacement des matrices par leur approximation à différents rangs permet au réseau de neurones d'apprendre une structure de matrices qui peut réduire la charge calculatoire.

Lorsque le premier critère est rempli, il est ainsi obtenu un réseau de neurones récurrents appris.

Le premier critère peut porter sur la fonction de coût C, ou la première sous-fonction de coût $SC_1$, calculée sur l'ensemble de la base de validation, ou bien encore sur le nombre maximal d'époques d'entraînement.

Il est ainsi obtenu un dispositif de prédiction 14 dit « intermédiaire ».

Les étapes qui suivent sont des étapes mises en oeuvre après l'entraînement visant à éliminer les paramètres ayant très peu d'influence sur la précision de la prédiction du dispositif de prédiction 14 intermédiaire.

Le jeu de validation (ou base de validation) est différent de la base de données d'entraînement mais présente des caractéristiques similaires, comme décrit précédemment.

Lors de l'étape de détermination E40, il est déterminé le rang optimal de chaque matrice pour qu'un deuxième critère de performance de prédiction par le dispositif de prédiction entraîné appliqué sur le jeu de validations soit rempli.

Il s'agit ici d'éliminer les valeurs singulières d'une matrice qui ont peu d'impact sur la prédiction finale du dispositif de prédiction 14.

Pour cela, il est itéré sur le rang une opération de calcul de la matrice obtenue en éliminant les valeurs singulières de chaque matrice présentant un rang supérieur au rang optimal déterminé et une opération de calcul de la valeur du deuxième critère de performance de prédiction par le dispositif de prédiction intermédiaire sur le jeu de validation, le rang déterminé étant le premier rang pour lequel le deuxième critère de performance de prédiction par le dispositif de prédiction intermédiaire sur le jeu de validation est rempli.

Ce qui vient d'être décrit sera mieux compris avec le pseudo-code qui suit :

- choix d'une métrique M($\hat{y}$,y) (par exemple : la première sous-fonction $SC_1$) et d'un seuil $\mu$ et d'une relation de comparaison $Obj(m, \mu)$.

- pour chaque matrice $W_k$ des couches récurrentes et pour $1 \leq r < \frac{H_k L_K}{H_k + L_k}$ , $H_k$ est le nombre de lignes et $L_k$ le nombre de colonnes :

    ◦ approximation de $W_k$ au rang r, par décomposition en valeur singulière,
    ◦ calcul de la métrique $\hat{M}$ moyennée sur le jeu de validation,
    ◦ Si $Obj(\hat{M},\mu)$ : le rang optimal de $W_k$ est r et quitter la boucle, sinon continuer la boucle.

Lors de l'étape d'obtention E50, chaque matrice $W_k$ est remplacée par les trois matrices de sa décomposition en valeur singulière à son rang optimal propre.

Cela permet d'obtenir un ensemble de matrices réduites et, par-là, un réseau de neurones dont les couches récurrentes sont réduites.

Ce réseau de neurones réduit correspond au dispositif de prédiction 14 mis au point.

Un tel procédé permet ainsi d'obtenir le dispositif de prédiction 14 souhaité, c'est-à-dire un dispositif physique implémentant un réseau de neurones mettant en jeu des couches récurrentes, présentant de bonnes performances, avec une complexité calculatoire réduite.

En particulier, la demanderesse a pu atteindre des gains en complexité calculatoire d'un facteur compris entre 5 et 10.

La mise en oeuvre physique du réseau de neurones présentant des couches récurrentes présente ainsi une empreinte mémoire réduite et requiert une puissance de calcul plus faible.

Cela permet aussi d'améliorer le portage du réseau de neurones et ainsi son industrialisation et sa rapidité.

Il est à noter que le procédé de mise au point est rapide à mettre en oeuvre puisque l'impact des calculs supplémentaires (notamment au niveau des matrices) est très limité sur le temps d'entraînement. En particulier, aucun temps long de recherche d'hyper-paramètres n'est impliqué.

Le présent procédé ne fait pas d'hypothèse pour la nature de la prédiction, de sorte que le présent procédé peut s'appliquer pour tout type de dispositif de prédiction.

Ainsi, le dispositif de prédiction 14 présente une meilleure embarquabilité, ce qui améliore la qualité de l'observation du système d'observation 10.

## Revendications

1. Procédé de mise au point d'un dispositif de prédiction (14), le dispositif de prédiction (14) prenant en entrée un signal d'entrée issu d'au moins un capteur (12) et prédisant en sortie une grandeur physique, le procédé étant mis en oeuvre par ordinateur et comprenant les étapes de :

   - choix d'une structure pour le dispositif de prédiction (14), la structure étant un ensemble de matrices formant un réseau de neurones présentant des couches récurrentes, chaque matrice de l'ensemble de matrices présentant un ensemble de paramètres à apprendre,
   - choix d'un rang en fonction des dimensions des différentes matrices,
   - réception d'une base de données,
   - entraînement du dispositif de prédiction, pour obtenir un dispositif de prédiction intermédiaire, l'entraînement étant mis en oeuvre avec la base de données reçue, une fonction de coût étant utilisée, l'étape d'entraînement étant itérée jusqu'à ce qu'un premier critère de performance du dispositif de prédiction soit rempli, l'étape d'entraînement comprenant, pour plusieurs itérations, une opération de remplacement du dispositif de prédiction obtenu à l'itération précédente par un dispositif de prédiction dans lequel les différentes matrices sont remplacées par leur approximation au rang choisi à l'étape de choix,
   - détermination du rang optimal de chaque matrice pour qu'un deuxième critère de performance de prédiction par le dispositif de prédiction intermédiaire appliqué à la base de données soit rempli, et
   - obtention d'un dispositif de prédiction mis au point en remplaçant chaque matrice par les trois matrices de la décomposition en valeurs singulières de ladite matrice et en éliminant les valeurs singulières de chaque matrice présentant un rang supérieur au rang optimal déterminé.

2. Procédé de mise au point selon la revendication 1, dans lequel les itérations durant lesquelles une opération de remplacement est mise en oeuvre sont périodiques.

3. Procédé de mise au point selon la revendication 1 ou 2, dans lequel la fonction de coût est la somme d'une première sous-fonction de coût caractérisant l'erreur de prédiction du dispositif de prédiction et du produit d'une deuxième sous-fonction de coût caractérisant le poids des valeurs singulières des matrices avec un paramètre dont la valeur est fonction de l'itération en cours.

4. Procédé de mise au point selon la revendication 3, dans lequel la deuxième sous-fonction de coût est une norme de Schatten d'ordre p, p étant un nombre entier non nul de préférence égal à 1.

5. Procédé de mise au point selon la revendication 3 ou 4, dans lequel le paramètre dépendant de l'itération en cours est une fonction affine croissante de l'itération.

6. Procédé de mise au point selon l'une quelconque des revendications 3 à 5, dans lequel la fonction affine est une fonction affine par morceaux, le paramètre valant 0 sur un morceau et le paramètre valant 1 sur un autre morceau.

7. Procédé de mise au point selon l'une quelconque des revendications 1 à 6, dans lequel l'étape de détermination du rang d'une matrice est réalisée en itérant sur le rang une opération de calcul de la matrice obtenue en éliminant les valeurs singulières de la matrice présentant un rang supérieur au rang considéré et une opération de calcul de la valeur du deuxième critère de performance de prédiction par le dispositif de prédiction intermédiaire sur le jeu de validations, le rang déterminé étant le premier rang pour lequel le deuxième critère de performance de prédiction par le dispositif de prédiction intermédiaire sur le jeu de validations est rempli.

8. Procédé d'observation d'un environnement par un système d'observation (10), le système d'observation (10) comprenant un dispositif de prédiction (14), le dispositif de prédiction (14) prenant en entrée un signal d'entrée issu d'au moins un capteur (12) et prédisant en sortie une grandeur physique, le dispositif de prédiction (14) ayant été mis au point par le procédé de mise au point selon l'une quelconque des revendications 1 à 7, le procédé comprenant les étapes de :

- acquisition d'un signal d'entrée par l'au moins un capteur (12), et
- prédiction d'une valeur pour la grandeur physique en utilisant le dispositif de prédiction (14).

9. Dispositif de prédiction (14) prenant en entrée un signal d'entrée issu d'au moins un capteur et prédisant en sortie une grandeur physique, le dispositif de prédiction (14) ayant été mis au point par le procédé de mise au point selon l'une quelconque des revendications 1 à 7.

10. Système d'observation (10) comprenant un dispositif de prédiction (14) selon la revendication 9.

10

12    14

## FIG.1

```
┌─────────┐
│   E10   │
└─────────┘
     │
┌─────────┐
│   E20   │
└─────────┘
     │
┌─────────┐
│   E30   │
└─────────┘
     │
┌─────────┐
│   E40   │
└─────────┘
     │
┌─────────┐
│   E50   │
└─────────┘
```

## FIG.2

**EP 4 202 784 A1**

Europäisches
Patentamt

European
Patent Office

Office européen
des brevets

# RAPPORT DE RECHERCHE EUROPEENNE

Numéro de la demande

**EP 22 21 5076**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | MARKUS KLIEGL ET AL: "Trace norm regularization and faster inference for embedded speech recognition RNNs", ARXIV.ORG, CORNELL UNIVERSITY LIBRARY, 201 OLIN LIBRARY CORNELL UNIVERSITY ITHACA, NY 14853, 25 octobre 2017 (2017-10-25), XP080831505, * abrégé; tableau 2 * * section 1, ligne 15 * * section 3, lignes 12-14 * * section 3.1, lignes 1-3 * * section 3.1, lignes 26-33 * * section 3.1, lignes 36-38 * * section 3.2, lignes 1-3 * * section 3.2.1, ligne 3 * * section 4 * * section 5, ligne 3 * * equations 2-5 * ----- | 1-10 | INV. G06N3/084 G06N3/044 G06N3/0495 G06N3/0442 |
| A | DAI RUI ET AL: "Fast Training and Model Compression of Gated RNNs via Singular Value Decomposition", 2018 INTERNATIONAL JOINT CONFERENCE ON NEURAL NETWORKS (IJCNN), IEEE, 8 juillet 2018 (2018-07-08), pages 1-7, XP033419015, DOI: 10.1109/IJCNN.2018.8489156 [extrait le 2018-10-10] * le document en entier * ----- | 1-10 | DOMAINES TECHNIQUES RECHERCHES (IPC) G06N |
| A | WO 2021/225256 A1 (SAMSUNG ELECTRONICS CO LTD [KR]) 11 novembre 2021 (2021-11-11) * le document en entier * ----- | 1-10 | |

Le présent rapport a été établi pour toutes les revendications

| Lieu de la recherche | Date d'achèvement de la recherche | Examinateur |
|---|---|---|
| La Haye | 24 mars 2023 | Aoun, Marc |

EPO FORM 1503 03.82 (P04C02)

## ANNEXE AU RAPPORT DE RECHERCHE EUROPEENNE
## RELATIF A LA DEMANDE DE BREVET EUROPEEN NO.

EP 22 21 5076

La présente annexe indique les membres de la famille de brevets relatifs aux documents  brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

24-03-2023

| Document brevet cité au rapport de recherche | Date de publication | Membre(s) de la famille de brevet(s) | Date de publication |
|---|---|---|---|
| WO 2021225256 A1 | 11-11-2021 | CN 115552416 A | 30-12-2022 |
| | | EP 4068162 A1 | 05-10-2022 |
| | | KR 20210136706 A | 17-11-2021 |
| | | US 2022036152 A1 | 03-02-2022 |
| | | WO 2021225256 A1 | 11-11-2021 |

Pour tout renseignement concernant cette annexe : voir Journal Officiel de l'Office européen des brevets, No.12/82